# EUROPÄISCHE PATENTSCHRIFT

(11) **EP 2 496 402 B1**
(45) Veröffentlichungstag und Bekanntmachung des Hinweises auf die Patenterteilung: **28.03.2018**
(21) Anmeldenummer: 10773630.8
(22) Anmeldetag: 05.11.2010
(51) Int. Cl.: B29C 65/18, B29C 65/30, B29C 65/78, H05B 3/14, B65B 7/28, B65B 51/14

(54) **EINRICHTUNG ZUM VERSIEGELN VON VERPACKUNGEN**
DEVICE FOR SEALING PACKAGINGS
DISPOSITIF DE SCELLEMENT D'EMBALLAGES

(30) Priorität: 06.11.2009 DE 102009046469
(43) Veröffentlichungstag der Anmeldung: 12.09.2012
(73) Patentinhaber: OPTIMA Filling and Packaging Machines GmbH, 74523 Schwäbisch Hall (DE)
(72) Erfinder: KIRCHER, Willi, 74535 Mainhardt (DE)
(74) Vertreter: Patentanwälte Ruff, Wilhelm, Beier, Dauster & Partner mbB
(86) Internationale Anmeldenummer: PCT/EP2010/066887
(87) Internationale Veröffentlichungsnummer: WO 2011/054921

(56) Entgegenhaltungen:
- EP-A1- 0 855 264
- EP-A1- 1 247 637
- WO-A1-2004/043877
- DE-A1- 1 704 322
- US-A- 5 682 732

## Beschreibung

Die Erfindung betrifft eine Einrichtung zum Versiegeln von Verpackungen oder dergleichen.

Verpackungen, beispielsweise Becher, werden häufig aus Kunststoff oder teilweise aus Kunststoff hergestellt und nach dem Befüllen mit einem Deckel versehen, der durch Erhitzen längs einer Siegelnaht mit dem Korpus des Behälters verbunden wird. Ebenfalls bekannt ist es, Folien auf diese Weise längs einer Siegelnaht miteinander zu verbinden.

Bei einer bekannten Vorrichtung zum Aufschweißen oder Aufsiegeln eines Deckels auf Behälter aus thermoplastischem Kunststoff wird der nach außen umgelegte Rand des Behälters unterstützt, der Deckel auf diesen Rand aufgelegt und mithilfe eines Schweiß- beziehungsweise Siegelstempels versiegelt (DE 6602588 U).

Ebenfalls bekannt ist ein Verfahren zum Herstellen von Heißsiegelverpackungen und ein Werkzeug zur Durchführung des Verfahrens (DE 19837763). Dabei werden zwei Lagen von Folien miteinander versiegelt.

Es ist bereits ein Heißsiegelgerät bekannt, das Verpackungen aus einem siegelfähigen Schlauch herstellen kann. Das Heißsiegelgerät weist zwei keramische Heizelemente auf (EP 1 247 637 A1).

Ebenfalls bekannt ist eine Siegelbacke zum Versiegeln thermoplastischen Materials, insbesondere Verpackungsmaterials. Die Siegelbacke enthält ein elektrisch isolierendes keramisches Material und ein elektrisch leitendes keramisches Material (US 5,682,732 A).

Weiterhin bekannt ist eine Siegelbacke mit elektrisch leitenden keramischen Materialien, die zur Erzeugung von Verpackungen aus thermoplastischem Material verwendbar ist (WO 2004/043877 A1).

Die Verwendung keramischer Kaltleiter zum Verbinden von Gegenständen aus thermoplastischen Kunststoffen ist ebenfalls bekannt. Sie werden zur Verbindung von Folien oder Folienabschnitten verwendet (DE 1704322).

Weiterhin ist ein Verfahren und eine Vorrichtung zum thermischen Verbinden eines Basisteils einer Verpackung mit einer Deckfolie bekannt, wobei eine Heizplatte mithilfe eines Keramikplättchens beheizt wird, das an einer Rückseite der Heizplatte angeordnet ist und mittels einer konventionellen elektrischen Heizung erwärmt wird (EP 0 855 264 A1). Dabei wird ein Träger vorgesehen, welcher Aufnahmeelemente für mehrere Basisteile aufweist. Zum Verbinden der Basisteile eines Trägers mit der Deckfolie wird ein zusammenhängendes Stück der Deckfolie, das sich über sämtliche Basisteile eines Trägers hinweg erstreckt, vorgesehen und der Träger wird mit der Deckfolie einem die Heizplatte aufweisenden Nutzen zugestellt.

Üblicherweise wird der Siegelstempel elektrisch beheizt. Dabei kommen häufig Masseheizkörper zum Einsatz. Das Aufheizen solcher Heizkörper benötigt relativ viel Zeit, so dass die Anfahrzeit solcher Vorrichtungen hoch ist. Um gute Siegelergebnisse zu erhalten, muss ein konstanter Temperaturzustand erreicht werden. Diesen Zustand zu erreichen dauerte lange. Darüber hinaus lässt sich eine exakte Regelung der Temperatur wegen der großen Wärmekapazität nur schwer verwirklichen.

Der Erfindung liegt die Aufgabe zu Grunde, eine Einrichtung der eingangs genannten Art zu schaffen, die schnell anspricht und bei der eine Temperaturregelung ebenfalls schnell ansprechen kann.

Zur Lösung dieser Aufgabe schlägt die Erfindung bei einer Einrichtung zum Versiegeln von siegelfähigen Verpackungen, Behältern oder dergleichen vor, für den Kontakt mit dem zu versiegelnden Material ein Heizelement vorzusehen, das durch einen keramischen Heizleiter beheizt ist, wobei die Einrichtung eine Stromzuführung zu dem keramischen Heizleiter, eine Andrückeinrichtung zum Andrücken des Heizelements an das zu versiegelnde Element, sowie eine Halteeinrichtung zum Halten eines zu versiegelnden Deckels aufweist. Aufgrund der geringen Wärmekapazität eines keramischen Heizleiters erfolgt eine schnelle Aufheizung mit einer geringen thermischen Trägheit, so dass sich die Temperatur mit geringerem Aufwand genauer regeln lässt.

Insbesondere kann vorgesehen sein, dass das Heizelement von einer Andrückplatte aus wärmeleitendem Material gebildet wird, die auf ihrer dem Behälter abgewandten Rückseite einen Heizring aus einem keramischen Heizleiter aufweist. Dieser Heizleiter heizt die Andrückplatte mit einer geringen Wärmekapazität schnell auf und lässt sich mit geringerem Aufwand genauer regeln.

In Weiterbildung der Erfindung kann vorgesehen sein, das Heizelement beziehungsweise die Andrückplatte so auszubilden, dass eine Berührung zwischen ihr und dem zu versiegelnden Element nur im Bereich der vorgesehenen Siegelnaht stattfindet. Dies kann beispielsweise dadurch geschehen, dass das Heizelement oder die Andrückplatte einen längs der vorgesehenen Siegelnaht verlaufenden Vorsprung aufweist, während es/sie im übrigen Bereich zurückgesetzt ist, um dort nicht zu einer Berührung zu kommen.

Zur Unterstützung dieser Maßnahme kann zusätzlich oder alternativ vorgesehen sein, den Heizring derart anzuordnen und auszubilden, dass er die Andrückplatte nur im Bereich der vorgesehenen Siegelnaht heizt.

Es kann in Weiterbildung ebenfalls vorgesehen sein, dass das Heizelement, insbesondere die Andrückplatte gegenüber dem restlichen Teil der Einrichtung thermisch isoliert angebracht ist.

Dies kann beispielsweise dadurch geschehen, dass der Heizleiter und die Andrückplatte an einem Siegelstempel angeordnet sind, wobei die Befestigung zwischen diesen beiden Elementen und dem Rest des Siegelstempels thermisch isoliert ausgebildet ist.

Da es für das Arbeiten einer Einrichtung, mit der sich die Erfindung befasst, auch wichtig ist, dass der Deckel korrekt gegenüber dem Behälter positioniert ist, weist erfindungsgemäß die Einrichtung eine Halteeinrichtung zum Halten des Deckels vor und während des Versiegelns auf. Diese Halteeinrichtung kann insbesondere natürlich auch an dem Siegelstempel angebracht sein.

Beispielsweise kann die Halteeinrichtung eine Ansaugeinrichtung aufweisen, um den Deckel zu halten, beispielsweise in der Mitte, so dass ausreichend Abstand zu der Siegelnaht besteht.

Da durch die Verwendung des keramischen Heizleiters das Aufheizen sehr schnell geschieht, ist es sinnvoll, die Einrichtung mit mindestens einem Temperaturfühler zu versehen. Erfindungsgemäß kann die Einrichtung also einen Temperaturfühler für die direkte Temperaturmessung der Siegelfläche aufweisen, und/oder einen Temperaturfühler zur Messung der Temperatur des keramischen Heizleiters, wobei vorzugsweise beide Temperaturfühler zur Regelung der Temperatur herangezogen werden.

Um den Siegelstempel auch austauschen zu können, kann erfindungsgemäß vorgesehen sein, dass dieser zur Verbindung mit der Andrückeinrichtung eine Schnellwechselaufnahme aufweist, mit deren Hilfe er an einer Einrichtung zum Andrücken angebracht und abgenommen werden kann. Vorzugsweise kann die Schnellwechselaufnahme Steckbuchsen oder sonstige Steckeinrichtungen für die Stromversorgung des keramischen Heizleiters und/oder für die Messwerte der Temperaturfühler aufweisen.

Weitere Vorzüge der Erfindung ergeben sich aus den Ansprüchen, der folgenden Beschreibung bevorzugter Ausführungsformen der Erfindung sowie anhand der Zeichnung. Hierbei zeigen:

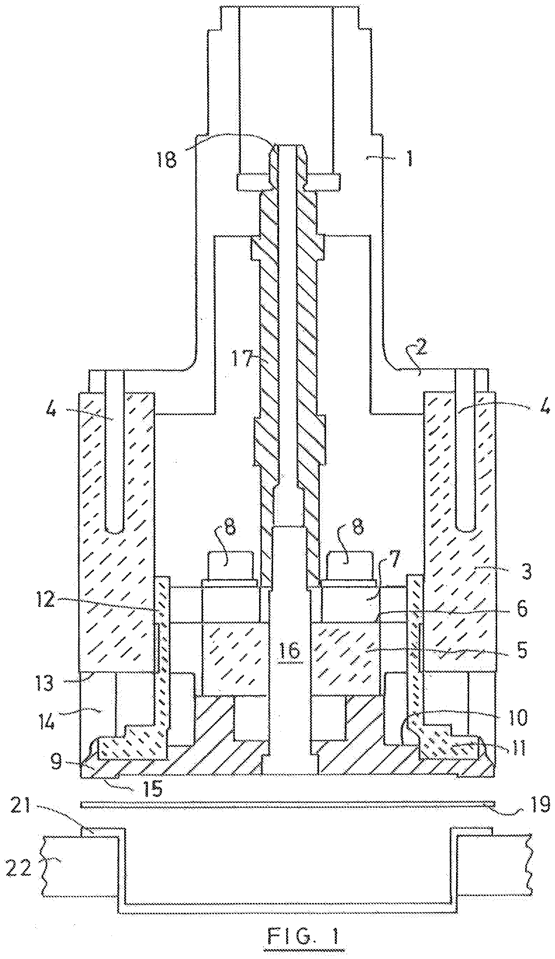

Figur 1 eine schematische Darstellung eines Siegelstempels als Teil einer Einrichtung nach der Erfindung.

Die Figur 1 zeigt einen Axialschnitt durch einen Siegelkopf einer Siegeleinrichtung nach der Erfindung. An dem in Figur 1 oberen Ende des Siegelkopfs ist eine Schnellwechselaufnahme 1 vorhanden, mit der es im Kopf an einer Maschine angebracht wird. Die Maschine dient unter anderem dazu, den Siegelkopf in Richtung seiner Achse nach unten zu bewegen, um ihn gegen einen zu versiegelnden Behälter anzudrücken.

Die Schnellwechselaufnahme 1 weist an ihrem in Figur 1 unteren Ende einen umlaufenden Flansch 2 auf. An der Unterseite dieses umlaufenden Flanschs 2 ist ein ringförmiger zylindrischer Isolierkörper 3 aus Isolierwerkstoff mit einer sehr niedrigen Wärmeleitfähigkeit befestigt, beispielsweise mit nur angedeuteten Schrauben 4. Dieser Isolierkörper 3 weist im Bereich seines unteren Endes einen Boden 5 auf. Auf die Oberseite 6 des Bodens 5 des Isolierkörpers 3 ist nochmals eine Isolierplatte 7 aufgelegt. Mit Hilfe mehrerer Schrauben 8, die durch die Isolierplatte 7 und den Boden 5 des Isolierkörpers 3 hindurchgehen, ist an dem Siegelkopf eine Andrückplatte 9 angeschraubt. Auf der nach innen gerichteten Oberseite 10 der Andrückplatte 9 ist ein Heizring 11 aus Industriekeramik mit einem keramischen Heizleiter angebracht. Von der der Andrückplatte 9 abgewandten Seite ragen von dem Heizring zwei Anschlüsse 12 an der Innenseite des Isolierkörpers 3 nach oben. Sie dienen der Stromzufuhr zu dem Heizleiter.

Zwischen die Andrückplatte 9 und die untere Stirnseite 13 des Isolierkörpers 3 ist ein Isolierring 14 aus einem Hochtemperaturisolierwerkstoff eingespannt, der durch das Festschrauben der Schrauben 8 festgehalten wird.

Die Unterseite der Andrückplatte 9 weist längs ihres Umfangs einen gegenüber dem mittleren Bereich vorstehenden Ringvorsprung 15 auf. Der Heizring aus Industriekeramik ist auf der Rückseite der Andrückplatte 9 in diesem Bereich vorhanden. Dadurch ist dafür gesorgt, dass die Andrückplatte 9 hauptsächlich in dem Bereich des Ringvorsprungs 15 beheizt wird, der zur Berührung mit dem zu versiegelnden Gegenstands dient.

Durch die Mitte der Andrückplatte 9 und den Boden 5 des Isolierkörpers 3 führt in axialer Richtung ein Rohr 16, das sich innerhalb des Raums im oberen Bereich durch einen weiteres Rohr 17 fortsetzt. Dieses Rohr 17 ragt durch den mittleren Teil der Schnellwechselaufnahme 1 hindurch, so dass sein oberes Ende 18 durch die Schnellwechselaufnahme her zugänglich ist. An dieses Rohr kann Unterdruck angelegt werden, so dass ein Deckel 19 hier angesaugt werden kann. Der Deckel 19 ist schematisch unterhalb des Siegelkopfs dargestellt.

Der Siegelkopf ist dazu bestimmt, einen Behälter 20 mit einem Deckel 19 zu versehen und den Deckel 19 längs eines nach außen umgelegten Randflanschs 21 des Behälters 20 zu versiegeln. Der Behälter 20 ist in einer Aufnahme 22 gehalten, wobei die Anordnung so getroffen ist, dass der umgelegte Randflansch 21 dem Ringvorsprung 15 an der Unterseite der Andrückplatte 9 gegenüberliegt.

Der Siegelkopf zum Versiegeln eines Behälters weist eine Andrückplatte auf, die aus einem wärmeleitenden Material mit einer Lebensmittelzulassung besteht. Auf der dem Behälter abgewandten Seite der Andrückplatte ist an dieser ein Heizring aus Industriekeramik mit einem keramischen Heizleiter angebracht, mit dessen Hilfe die Andrückplatte geheizt wird. Durch die geringe Wärmekapazität und das schnelle Ansprechen des keramischen Heizleiters kann die Siegeleinrichtung schneller und genauer arbeiten.

Bei der hier beschriebenen Ausführungsform wird eine Andrückplatte aus wärmeleitendem Material verwendet, die auf ihrer Rückseite einen Heizring aus einem keramischen Heizleiter aufweist. Es ist aber ebenfalls möglich, dass der keramische Heizleiter zur direkten Berührung des zu versiegelnden Materials ausgebildet ist, wobei er auch in diesem Fall als Ring ausgebildet sein kann, oder die Form der Andrückplatte 9 aufweisen kann.

## Patentansprüche

1. Einrichtung zum Versiegeln von siegelfähigen Verpackungen, Behältern (20) oder dergleichen, mit
1.1 einem zum Kontakt mit dem zu versiegelnden Material bestimmten Heizelement, das
1.2 durch einen keramischen Heizleiter (11) beheizt ist,
1.3 einer Stromzuführung zu dem keramischen Heizleiter (11),
1.4 einer Andrückeinrichtung zum Andrücken des Heizelements an das zu versiegelnde Element, **dadurch gekennzeichnet, dass**
1.5 die Einrichtung eine Halteeinrichtung zum Halten eines zu versiegelnden Deckels (19) aufweist.

2. Einrichtung nach Anspruch 1, bei der das zum Kontakt mit dem zu versiegelnden Material bestimmte Heizelement von dem keramischen Heizleiter (11) gebildet ist.

3. Einrichtung nach einem der vorhergehenden Ansprüche, bei der das Heizelement so ausgebildet ist, dass eine Berührung zwischen ihm und dem zu versiegelnden Element nur im Bereich der vorgesehenen Siegelnaht stattfindet.

4. Einrichtung nach Anspruch 1, bei der das zum Kontakt mit dem zu versiegelnden Material bestimmte Element von einer Andrückplatte (9) aus wärmeleitendem Material gebildet ist, mit deren Rückseite der keramischen Heizleiter in Form eines Heizrings (11) verbunden ist.

5. Einrichtung nach Anspruch 4, bei der die Andrückplatte (9) so ausgebildet ist, dass eine Berührung zwischen ihr und dem zu versiegelnden Element nur im Bereich der vorgesehenen Siegelnaht stattfindet.

6. Einrichtung nach Anspruch 4 oder 5, bei der der Heizring (11) derart angeordnet und ausgebildet ist, dass er die Andrückplatte (9) nur im Bereich der vorgesehenen Siegelnaht heizt.

7. Einrichtung nach einem der vorhergehenden Ansprüche 4 bis 6, bei der die Andrückplatte (9) und der Heizring (11) an einem Siegelkopf angeordnet sind.

8. Einrichtung nach Anspruch 7, bei der die Andrückplatte (9) und/oder der Heizring (11) mithilfe einer Wärmeisolierung angebracht sind.

9. Einrichtung nach Anspruch 7 oder 8, mit einer an dem Siegelkopf angebrachten Schnellwechselaufnahme (1).

10. Einrichtung nach Anspruch 9, mit thermisch isolierten Steckkontakten an der Schnellwechselaufnahme (1) für die Stromversorgung des keramischen Heizleiters.

11. Einrichtung nach einem der vorhergehenden Ansprüche, bei der die Halteeinrichtung eine Ansaugeinrichtung aufweist.

12. Einrichtung nach einem der vorhergehenden Ansprüche, mit einem Temperaturfühler zur direkten Temperaturmessung der Siegelfläche.

13. Einrichtung nach einem der vorhergehenden Ansprüche, mit einem Temperaturfühler zur Messung der Temperatur des keramischen Heizleiters.

## Claims

1. Device for sealing of sealable packages, containers (20) or the like,
1.1 with a heating element intended for contact with the material to be sealed that
1.2 is heated by a ceramic heating conductor (11),
1.3 with a power supply to the ceramic heating conductor (11),
1.4 with a pressing device for pressing the heating element against the element to be sealed,
**characterized in that**
1.5 the device includes a holding device for holding a lid (19) to be sealed.

2. Device according to Claim 1, wherein the heating element intended to contact the material to be sealed is formed by the ceramic heating conductor (11).

3. Device according to any of the preceding Claims, wherein the heating element is designed such that any contact between it and the element to be sealed takes place only in the area of the intended sealing seam.

4. Device according to Claim 1, wherein the element intended to contact the material to be sealed is formed by a pressure plate (9) made of heat-conducting material, to whose rear face the ceramic heating conductor in the form of a heating ring (11) is connected.

5. Device according to Claim 4, wherein the pressure plate (9) is designed such that any contact between it and the element to be sealed takes place only in the area of the intended sealing seam.

6. Device according to Claim 4 or 5, wherein the heating ring (11) is arranged and designed such that it heats the pressure plate (9) only in the area of the intended sealing seam.

7. Device according to any of the preceding claims Claims 4 to 6, wherein the pressure plate (9) and the heating ring (11) are arranged on a sealing head.

8. Device according to Claim 7, wherein the pressure plate (9) and/or the heating ring (11) are attached with the aid of a thermal insulation.

9. Device according to Claim 7 or 8, including a quick-change mounting (1) attached to the sealing head.

10. Device according to Claim 9, including thermally insulated plug contacts on the quick-change mounting (1) for supplying power to the ceramic heating conductor.

11. Device according to any of the preceding Claims, wherein the holding device has a suction unit.

12. Device according to any of the preceding Claims, including a temperature sensor for direct temperature measurement of the sealing surface.

13. Device according to any of the preceding Claims, including a temperature sensor for measuring the temperature of the ceramic heating conductor.

## Revendications

1. Dispositif de scellage des emballages, récipients (20) ou objets similaires scellables, avec
1.1 un élément de chauffe destiné au contact avec le matériau à sceller, lequel élément de chauffe
1.2 est chauffé par un conducteur chauffant en céramique (11),
1.3 une alimentation électrique du conducteur chauffant en céramique (11),
1.4 un dispositif de pression pour presser l'élément de chauffe contre l'élément à sceller, caractérisé en ce
1.5 que le dispositif présente un support pour tenir un couvercle à sceller (19).

2. Dispositif selon la revendication 1, dans lequel l'élément de chauffe destiné au contact avec le matériau à sceller est formé par le conducteur chauffant en céramique (11).

3. Dispositif selon une des revendications précédentes, dans lequel l'élément de chauffe est conçu de telle sorte qu'un contact entre celui-ci et l'élément à sceller n'a lieu que dans la zone du joint scellé prévu.

4. Dispositif selon la revendication 1, dans lequel l'élément destiné au contact avec le matériau à sceller est formé par une plaque de pression (9) en matériau thermoconducteur avec le dos de laquelle est relié le conducteur chauffant en céramique sous forme d'anneau chauffant (11).

5. Dispositif selon la revendication 4, dans lequel la plaque de pression (9) est conçue de telle sorte qu'un contact entre celle-ci et l'élément à sceller n'a lieu que dans la zone du joint scellé prévu.

6. Dispositif selon la revendication 4 ou 5, dans lequel l'anneau chauffant (11) est disposé et conçu de sorte à chauffer la plaque de pression (9) uniquement dans la zone du joint scellé prévu.

7. Dispositif selon une des revendications précédentes 4 à 6, dans lequel la plaque de pression (9) et l'anneau chauffant (11) sont disposés sur une tête de scellage.

8. Dispositif selon la revendication 7, dans lequel la plaque de pression (9) et/ou l'anneau chauffant (11) sont montés avec une isolation thermique.

9. Dispositif selon la revendication 7 ou 8, avec une fixation à remplacement rapide (1) montée sur la tête de scellage.

10. Dispositif selon la revendication 9, avec des contacts enfichables thermo-isolés sur la fixation à remplacement rapide (1) pour l'alimentation électrique du conducteur chauffant en céramique.

11. Dispositif selon une des revendications précédentes, dans lequel le support présente un dispositif d'aspiration.

12. Dispositif selon une des revendications précédentes, avec une sonde de température pour la mesure directe de la température de la surface de scellage.

13. Dispositif selon une des revendications précédentes, avec une sonde de température pour la mesure de la température du conducteur chauffant en céramique.
